(19) Europäisches Patentamt
European Patent Office
Office européen des brevets

(11) **EP 2 508 881 B1**

(12) **EUROPEAN PATENT SPECIFICATION**

(45) Date of publication and mention
of the grant of the patent:
**23.01.2019 Bulletin 2019/04**

(51) Int Cl.:
***G01N 33/00*** *(2006.01)*

(21) Application number: **11002800.8**

(22) Date of filing: **04.04.2011**

(54) **Testing a humidity sensor**

Prüfen eines Feuchtigkeitssensors

Test d'un capteur d'humidité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.10.2012 Bulletin 2012/41**

(73) Proprietor: **Sensirion AG
8712 Stäfa (CH)**

(72) Inventors:
• **Graf, Markus
8005 Zürich (CH)**
• **Schanz, Christoph
8712 Stäfa (CH)**

(74) Representative: **Toleti, Martin
E.Blum & Co. AG
Vorderberg 11
8044 Zürich (CH)**

(56) References cited:
**GB-A- 2 097 130    JP-A- 2010 237 130
US-A- 5 792 938    US-A1- 2005 218 465**

• **SENSIRION-THE SENSOR COMPANY: "SHT75 -
data sheet (humidity and temperature sensor)",
INTERNET CITATION, May 2005 (2005-05),
XP003000128, Retrieved from the Internet:
URL:http://sensirion.com/images/getFile?id
[retrieved on 2006-01-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The invention relates to a method for testing a humidity sensor, a corresponding computer program element, and to an arrangement for testing a humidity sensor.

Background of the Invention

Humidity sensors are used in many different applications. What is common to nearly all the applications is that for the reason that the relative humidity in the environment of the sensor shall be detected, a sensitive element of such humidity sensor needs to be exposed to the environment for allowing sufficient access of the medium / the air containing the humidity to such sensitive element. However, the environment may contain chemical substances affecting the capability of the sensitive element to absorb humidity as required for precise measurements.

In EP 1 236 03B B1, a humidity sensor is disclosed with interdigital electrodes being arranged on a substrate. A sensitive layer, for example a polymer layer, is deposited on the substrate and covers the electrodes. The polymer layer is susceptible to humidity. Humidity absorbed by the polymer layer changes the dielectric constant of the polymer layer such that a capacity between the electrodes represents a measure for the relative humidity of the environment.

In JP 2010 237130 A, a humidity measuring device includes two humidity sensors having a humidity element and temperature element for measuring relative humidity and temperature, and a heater for performing heating cleaning of the humidity element. A first dew-point calculation unit of the humidity measuring device determines a first dew-point temperature based on the relative humidity and temperature in a measurement environmental atmosphere using one humidity sensor. A second dew-point calculation unit determines a second dew-point temperature based on the relative humidity and temperature during the heater heating using the other humidity sensor. When a difference occurs between the dew-point temperature of the humidity sensor during normal measurement without heating and the dew-point temperature of the humidity sensor during the heating, the humidity element is already degraded by the measurement environmental atmosphere. A degradation decision unit determines whether the degradation requiring the cleaning occurs in the moisture sensitive element during the normal measurement based on the difference between the first dew-point temperature and second dew-point temperature.

In US 5,792,938 A, a method of humidity measurement is provided wherein a humidity responsive element is subjected to the measuring environment and its temperature coefficient is measured. A system operates a sensor element between a first temperature and a second temperature, determining its temperature coefficient, which is then compared to a previously compiled table. The differential measurement thus made automatically corrects for system error originating in equipment drift, cable capacitance change and various aging and slow hysteresis or sensor capacitance variations.

In GB 2 097 130 A, in a control of an industrial drying operation by reference to a moisture content of exhaust gas, automatic maintenance of a reliable control signal is provided in spite of degrading through contamination of the moisture sensor (hygrometer) by systematically recalibrating the moisture sensor at intervals of time. A predetermined relationship between the moisture sensor output signal and the control signal is stored in a microprocessor, and this relationship is periodically varied in accordance with the condition of the moisture sensor in response to subjecting the moisture sensor to air sources of different known values of moisture content. A moisture content output signal may also be provided which is uninfluenced by the condition of the sensor. If, when using an air source having known moisture content, the moisture output signal varies by more than a predetermined amount in a given period, a warning signal is provided to indicate that the sensor is unsuitable for further use.

Disclosure of the Invention

The problem to be solved by the present invention is therefore to provide a test for a humidity sensor which test allows for a conclusion if the humidity sensor is impaired in its capabilities of measuring humidity.

This problem is solved by a method for testing a humidity sensor according to the features of independent claim 1.

According to this method, a relative humidity is measured by the humidity sensor twice at different temperatures. For both measurements, corresponding values are calculated. These values are then evaluated. The evaluation result allows for a conclusion if the humidity sensor may be impaired in its capabilities of measuring humidity.

The present idea makes use of the characteristics of a saturated vapour pressure at the different temperatures measured. There may be different ways for calculating values that combine the saturated vapour pressure with the relative humidity as measured. One preferred way is to determine a dew point for each measurement, a formula for such dew point being dependent on the measured relative humidity and the saturated vapour pressure at the measured temperature. Another preferred way is to determine an absolute humidity for each measurement, a formula for such absolute humidity being dependent on the measured relative humidity and the saturated vapour pressure at the measured temperature.

For the embodiment of the dew point representing the value being evaluated the following section may provide a reasoning why the above method may support the detection of impaired humidity sensors.

The dew point denotes a temperature to which air needs to be cooled down in order to make vapour inherent in the air change its state into liquid water. This means that the dew point typically denotes a temperature below the current temperature. However, when the dew point is equal to the current temperature, the air is fully saturated by humidity.

The relative humidity which can be measured by appropriate humidity sensors denotes the ratio of a current saturation of air with humidity relative to a maximum saturation of air with humidity. The relative humidity is dependent on the temperature. When the temperature increases, the capability of air to absorb additional humidity increases. However, this results in a decrease of the relative humidity since the current saturation of the air now is put into relation with a maximum saturation that is higher than before. As a result, with rising temperatures the relative humidity decreases, while with temperatures dropping the relative humidity rises.

Formulas for calculating the dew point are dependent on the temperature and the relative humidity at such temperature. With respect to the above said, the relative humidity itself is dependent on the temperature. For any change in temperature the relative humidity changes into the opposite direction. In effect, for the dew point determination, any change in the temperature shall be irrelevant. Irrespective of the temperature, the dew point remains constant since it denotes the temperature to which the temperature needs to be cooled down for effecting a phase transformation from vapour to water.

However, when the capability of the humidity sensor to absorb humidity is affected, the relative humidity measured may no longer correspond to the real relative humidity in the air. The correlation between the temperature and the relative humidity measured may be modified compared to an unaffected humidity sensor. From a bare measuring of the relative humidity one would not become aware of the impairment of the humidity sensor.

In contrast to the relative humidity, the calculated dew point or any other value dependent on the saturated vapour pressure at the measured temperature and the associated measured relative humidity may be an appropriate indicator for a humidity sensor being affected in its sensing capabilities: Whenever for different temperatures the dew point - or more generally the value determined subject to the measured temperature and the associated measured relative humidity - no longer remains constant but varies, the conclusion may be that the sensing capability of the humidity sensor is affected. In particular, when the dew point calculated for a first relative humidity measured at a first temperature is different from the dew point calculated for a second relative humidity measured at a second temperature, then the humidity sensor may be detected as an affected humidity sensor and may need to be cleaned or replaced, for example.

Summarizing, the present idea is based on the insight that although the relative humidity output by a humidity sensor changes with varying temperature, associated values such as the dew point or the absolute humidity which are calculated based on the measured relative humidity and the temperature do not change for varying temperatures. In case the dew point or another such value changes, this can be taken as an indicator that the humidity sensor is affected and its signal no longer reflects the real relative humidity of the environment.

Varying the temperature of an air volume for which the humidity shall be measured may not be easy to achieve for test purposes. For this reason, it is proposed in a preferred embodiment, that the humidity sensor itself may be subjected to a varying temperature. Heating or cooling the humidity sensor itself may be an appropriate means for the present testing. As a result, it is preferred that the temperature of the humidity sensor is measured. It is preferred, that the temperature sensor is arranged close to the humidity sensor such that the temperature sensor substantially senses the temperature of the humidity sensor itself. In case the humidity sensor is integrated on a substrate, it is preferred to integrate the temperature sensor on this substrate, too. Given that the substrate may have a good thermal conductivity, an arrangement of the heater and the temperature sensor in close vicinity to the humidity sensor on the substrate may provide measuring results substantially representing the temperature of the humidity sensor or at least a strong dependency from such temperature.

According to another aspect of the present invention, a computer program element as defined in claim 12 is provided which may be used in testing a humidity sensor. The computer program element comprises computer program code means for calculating a first value based on a first temperature and a first relative humidity measured by a humidity sensor at the first temperature, calculating a second value based on a second temperature and a second relative humidity measured by the humidity sensor at the second temperature, and comparing the first value with the second value. The first value is based on a saturated vapour pressure at the first temperature, and the second value is based on a saturated vapour pressure at the second temperature.

According to a further aspect of the present invention, an arrangement for testing a humidity sensor is provided, as defined in claim 13. The arrangement comprises the humidity sensor, a temperature sensor, and one of a heater and a cooler. A control unit is adapted for calculating a first value based on a first relative humidity measured by the humidity sensor at a first temperature and based on a saturated vapour pressure at the first temperature which first temperature is measured by the temperature sensor. The control unit is further adapted for calculating a second value based on a second relative humidity measured by the humidity sensor at a second temperature and based on a saturated vapour pressure at the second temperature which second temperature is measured by the temperature sensor. The control unit is further adapted for comparing the first value with the second value.

Other advantageous embodiments are listed in the dependent claims as well as in the description below.

The described embodiments similarly pertain to the method, the arrangement, and the computer program element. Synergetic effects may arise from different combinations of the embodiments although they might not be described in detail.

Brief Description of the Drawings

The aspects defined above and further aspects, features and advantages of the present invention can also be derived from the examples of embodiments to be described hereinafter and are explained with reference to examples of embodiments illustrated in the Figures. The Figures show:

> FIG. 1 a cut through a schematic testing arrangement according to an embodiment of the present invention,
> FIG. 2 a diagram illustrating two dew point characteristics, a first one based on relative humidity measures accomplished with a properly working humidity sensor, and a second one based on relative humidity measures accomplished with an impaired humidity sensor, and
> FIG. 3 a diagram illustrating an interrelationship between the dew point, the relative humidity and the absolute humidity,
> FIG. 4 to FIG. 9 flow diagrams, each representing a method for testing a humidity sensor according to an embodiment of the present invention.

Detailed Description of the Invention

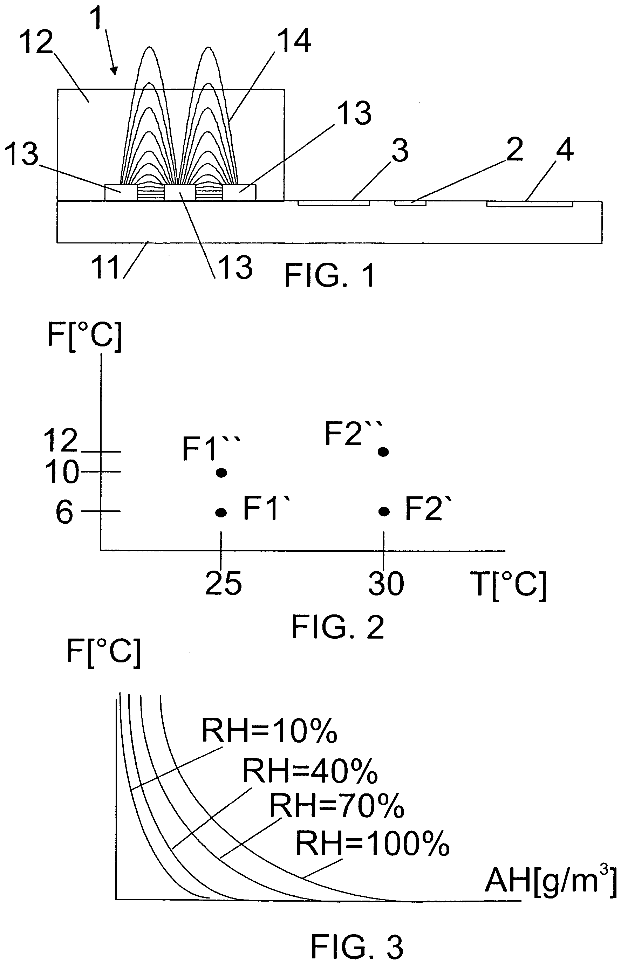

Figure 1 illustrates a longitudinal cut through a schematic testing arrangement for testing a humidity sensor according to an embodiment of the present invention.

The humidity sensor 1 comprises a substrate 11, electrodes 13 arranged on or integrated into the substrate 11, and a humidity sensitive layer 12 arranged on the substrate 11 covering the electrodes 13. The sensitive layer 12 preferably is a polymer layer or a ceramic layer and is susceptible to humidity. A change in a dielectric constant of the sensitive layer 12 results in a change of a capacitance of the sensitive layer 12. The electrodes 13 are arranged as planar interdigital electrodes for measuring the capacitance of the sensitive layer 12 by means of an electric field indicated by reference numeral 14 penetrating the sensitive layer 12. A signal provided by the electrodes 13 may be taken as a measure for the relative amount of water molecules being absorbed in the sensitive layer 12 reflecting the relative humidity of the air surrounding the test arrangement.

A heater 3 in form of a resistance heater and a temperature sensor 2 are arranged on the same substrate 11 next to the humidity sensor 1. The heater 3 is arranged such that when activated it allows for heating the humidity sensor 1. The temperature sensor 2 is arranged such that it allows for substantially measuring the temperature of the humidity sensor 1. Advantageously, the heater 3 and the temperature sensor 2 are arranged close to the humidity sensor 1, in a preferred embodiment within a radius of 5mm from the humidity sensor 1, and, in another preferred embodiment, the humidity sensor 1, the temperature sensor 2 and the heater 3 are arranged on the common substrate 11. The heater 3 and the temperature sensor 2 will be used during the testing routine as will be explained later on.

A control unit 4 is schematically illustrated in Figure 1 as being integrated into the substrate 11 which substrate 11 may preferably be a semiconductor substrate. The control unit 4 may be adapted for testing the humidity sensor 1. The control unit 4 is connected to the humidity sensor 1, the temperature sensor 2, and the heater 3. It is envisaged that the control unit 4 may receive signals indicative of the relative humidity from the humidity sensor 1. For such purpose, additional circuitry may be implemented on the substrate 11, such as an A/D converter, or circuitry with other functionality. The control unit 4 may also receive signals indicative of the current temperature from the temperature sensor 2. The control unit 4 may also be adapted for activating and deactivating the heater 3 when needed. The control unit 4 may be adapted for automatically performing a value determination as explained later on and for initiating associated heating and/or cooling actions and/or measurements such that the control unit may perform a built-in self test of the humidity sensor.

Although the relative humidity output by a humidity sensor changes when the temperature is varied - taking a certain delay time into account -, values based on the saturated vapour pressure at the subject temperature and based on the subject relative humidity are expected to remain constant. A tolerance for a value such as the dew point or the absolute humidity may be set. In case the relevant value is a dew point, for example, an allowed tolerance for such dew point may be at some temperature between 0.5° Celsius and 1° Celsius. Any such tolerance may be set subject to the temperature measured. Whenever the calculated value is rising or falling outside the accepted tolerance after a change in temperature, the humidity sensor can be expected to provide false relative humidity values.

The saturated vapour pressure as a function of the temperature may be given by:

$$e(T) = \alpha \exp\left(\frac{mT}{T_n + T}\right)$$

wherein:

> e denotes the saturated vapour pressure in Pascal,
> T denotes the temperature in °Celsius,
> m denotes a first constant,
> $T_n$ denotes a second constant, and
> $\alpha$ denotes a third constant.

The above formula for the saturated vapour pressure is also known as Magnus formula. Typically, the constant m is set to 17.62, the constant $T_n$ is set to 243.12° Celsius and the constant $\alpha$ is set to 6.112 hPa. However, there may be other formulas and/or approximations which may represent the saturated vapour pressure, too.

In a preferred embodiment, the values calculated are dew point values F1 and F1 determined for two different temperatures and two associated measured relative humidity values according to

$$F(\phi, T) = T_n \frac{\ln\left(\dfrac{\phi \exp^{\frac{mT}{T_n+T}}}{100\%}\right)}{m - \ln\left(\dfrac{\phi \exp^{\frac{mT}{T_n+T}}}{100\%}\right)}$$

wherein:

> F denotes the dew point in °Celsius,
> $\Phi$ denotes the relative humidity in %,
> T denotes the temperature in °Celsius,
> m denotes a first constant, and
> $T_n$ denotes a second constant.

The formula for the dew point is derived from the above Magnus formula. Again, the constant m is set to 17.62, while the constant $T_n$ is set to 243.12° Celsius. With these constants m, $T_n$ the dew point F remains dependent from the relative humidity $\Phi$ and the temperature T, wherein the relative humidity $\Phi$ itself is dependent from the temperature T, i.e. $\Phi = f(T)$. Note that the relative humidity $\Phi$ is rising when the temperature T is falling, and vice versa. Other approximations to determining the dew point and/or the underlying saturation vapour pressure may be used instead, or in addition to the above approximation.

In the present testing arrangement, the relative humidity $\Phi$ is measured by the humidity sensor, for example the humidity sensor 1 of Figure 1. The temperature T for which the humidity sensor 1 provides the associated relative humidity $\Phi$ is measured by the temperature sensor 2. It is noted that the measurements of the temperature T and the associated relative humidity $\Phi$ advanta-

geously are performed within a time interval in which it can be expected that the temperature T does not change. As a result, a first relative humidity $\Phi1$ is measured as is the corresponding first temperature T1. When entering the values of $\Phi1$ and T1 into the dew point formula a first dew point F1 can be calculated.

Then, the humidity sensor temperature T is modified and as a result the temperature T of the air volume in the close vicinity of the humidity sensor 1 becomes modified, too. In the present example, the temperature T of the humidity sensor 1 is increased by means of the heater 3 of Figure 1. After a certain time has passed after activation of the heater 3, in which time it can be expected that the temperature of the humidity sensor 1 has changed significantly, the current humidity sensor temperature is measured as second temperature T2, as is the associated second relative humidity $\Phi2$. Again, it is preferred that the measurements of the temperature T and the associated relative humidity $\Phi$ are performed in a time interval in which it can be expected that the temperature does not change. When entering both values T2 and $\Phi2$ into the dew point formula a second dew point value F2 can be calculated.

Figure 2 shows a diagram illustrating two dew point characteristics over temperature T. The first dew point characteristic is represented by the two lower dew points F1' and F2' and is based on measurements accomplished with a properly working humidity sensor. A first dew point F1' at the first temperature T1=25° degrees Celsius is calculated to a value F1'=6° degrees Celsius, and a second dew point F2' at the second temperature T2=30° degrees Celsius is calculated to a value F2'=6° degrees Celsius which is equal to the first dew point value F1'. For the reason that the dew point for a properly working humidity sensor remains constant irrespective of a change in the temperature T, a conclusion is legitimate that the present humidity sensor is working properly.

The second dew point characteristic is represented by two upper dew points F1" and F2" and is based on measurements accomplished with an impaired humidity sensor. The first dew point F1" at the first temperature T1=25° degrees Celsius is calculated to a value F1" of 10° degrees Celsius, and the second dew point F2" at the second temperature T2=30° degrees Celsius is calculated to a value F2" of 12° degrees Celsius. A deviation between the dew points F"2 and F"1 is two degrees Celsius which is above a sample threshold TH of one degree Celsius which may, in the present embodiment, represent the critical threshold TH for differentiating between a properly working humidity sensor and an impaired humidity sensor.

While in the above example, the dew points themselves were evaluated as critical values for determining if the underlying humidity sensor is impaired, in another preferred embodiment, it generally is value V1 and value V2 being analyzed e.g. by means of forming a deviation |V2-V1| between such values V2, V1, which values V2, V1 are based on the saturated vapour pressures for the subject temperatures.

In a preferred embodiment, such values V1, V2 may represent the absolute humidity AH1, AH2. The absolute humidity AH in [g/m3] is interrelated with the relative humidity - which in this specific example is denoted as RH instead of $\Phi$ - in % and the maximum humidity MH in g/m3 by: RH=(AH/MH)*100%.

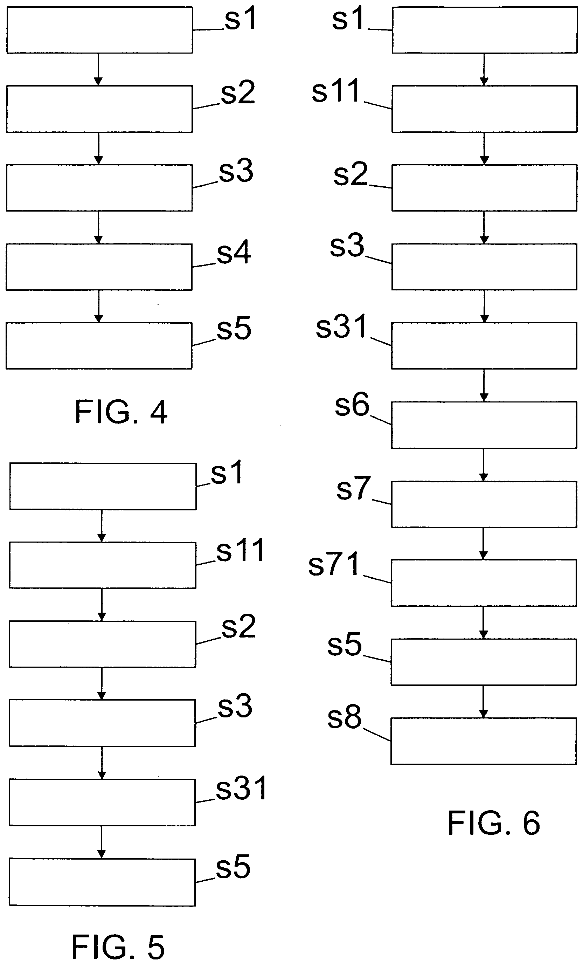

Figure 3 illustrates a relationship between the dew point F in degrees Celsius, the relative humidity RH in % and the absolute humidity AH in g/m3 in form of a diagram including various characteristics for various relative humidity values RH. When using the absolute humidity AH as differentiator value V, it is preferred that the corresponding dew points F are determined in one of the ways as illustrated above. Then, the absolute humidity AH can be determined by using a diagram such as shown in Figure 4. The information contained in such diagram may preferably be electronically stored in the test arrangement in form of a look up table within the control unit 4. When having the dew point F calculated subject to a measured relative humidity RH and a measured temperature T, the absolute humidity AH can be determined from such look-table. Determining the absolute humidity AH as the relevant value V to be evaluated finally results in two absolute humidity values AH1 and AH2 to be compared with a threshold TH, i.e. |AH2-AH1|>TH, by means of which term it is determined if the humidity sensor is not working properly or not.

In another embodiment, the absolute humidity AH may be defined by

$$AH(\phi,T) = \mu \frac{e_{actual}}{v+T} = \mu \frac{\dfrac{\phi}{100\%}e}{v+T}$$

with $e_{actual}$ representing the actual vapour pressure $e_{actual}$ with the actual vapour pressure $e_{actual}$ being related to the saturation vapour pressure e by

$$e_{actual}(\phi,T) = \frac{\phi}{100\%}e$$

By means of inserting the term for the saturation vapour pressure e in the above equation for the absolute humidity AH, the formula for the absolute humidity AH reads as

$$AH(\phi,T) = \mu \frac{\dfrac{\phi}{100\%}\alpha \exp^{\frac{mT}{T_n+T}}}{v+T}$$

wherein:

AH denotes the absolute humidity in g/m3,

$\Phi$ denotes the relative humidity in %,
T denotes the temperature in °Celsius,
m denotes a first constant,
$T_n$ denotes a second constant,
$\alpha$ denotes a third constant,
$\mu$ denotes a fourth constant, and
v denotes a sixth constant.

Typically, the constant m is set to 17.62, the constant $T_n$ is set to 243.12° Celsius, the constant $\alpha$ is set to 6.112 hPa, the constant $\mu$ is set to 216.7, and the constant v is set to 273.15°C. The constant v convers the formula into °Celsius measures instead of Kelvin, and the constant $\mu$ stems from the ideal gas law and is determined by

$$\mu = M_{H2O}\frac{V}{R}$$

wherein

$M_{H2O}$ = 18 g/mol representing the molar weight of water,
R = 8.314472 J/mol K
and V representing the volume.

In the following flow diagrams of Figure 4 to 9, the same steps are denoted by the same reference numerals across all flow diagrams.

Figure 4 illustrates a flow diagram representing a method for testing a humidity sensor according to an embodiment of the present invention, preferably based on a testing arrangement as illustrated in Figure 1. In step s1, the current temperature T1 of the humidity sensor 1 and the current relative humidity $\Phi$1 are measured by the respective sensors wherein both measurements are taken simultaneously, or are sequentially timed such that it can be expected that the temperature T and the relative humidity $\Phi$ have not changed between the measurements. The first temperature T1 and the first relative humidity $\Phi$1 are stored in a memory of the control unit 4.

In step s2, the heater 3 is activated. The temperature of the humidity sensor 1 is heated, and after a certain time of heating the elevated temperature of the humidity sensor 1 is measured as second temperature T2. Alternatively, when the temperature may be monitored continuously, the heater 3 may be switched off when a given second temperature T2 is reached. Its value T2 is taken as measured second temperature T2. In the same step s3, a second relative humidity value $\Phi$2 is measured at the second temperature T2. Again, both measurements of T2 and $\Phi$2 are taken simultaneously, or are sequentially timed such that it can be expected that the temperature and the relative humidity have not changed between the measurements. The second temperature T2 and the second relative humidity $\Phi$2 are stored in a memory of the control unit 4.

In step s4, a first dew point F1 is calculated subject to the measured first temperature T1 and the measured first relative humidity Φ1. In the same step s4, a second dew point F2 is calculated subject to the measured second temperature T2 and the measured second relative humidity Φ2.

In step s5, the dew points F1 and F2 are evaluated. Preferably, the dew points F1 and F2 are compared to each other, and a deviation |F2-F1| may be determined. In case the deviation |F2-F1| exceeds a threshold TH which threshold TH may be interpreted as a tolerance, such that |F2-F1| > TH, it can be concluded that the humidity sensor 1 is not working properly. In the same step s5, a signal may be issued when the deviation |F2-F1| exceeds the threshold TH based on which signal an operator of the humidity sensor 1 may replace, clean or otherwise repair the humidity sensor 1.

Figure 5 illustrates a method according to another embodiment of the present invention, again by means of a flow diagram. The steps s1, s2, s3 and s5 represent the same content as in Figure 4. For this reason, only the differences with respect to the method illustrated in Figure 4 are emphasized. The method of Figure 5 differs from the method in Figure 4 in that the calculation of the dew point is immediately performed after the measures needed for the respective calculation are taken. Immediately after measuring the first temperature T1 and the first relative humidity Φ1 in step s1, the first dew point F1 is calculated in step s11.

The same holds for step s31, in which immediately after measuring the second temperature T2 and the second relative humidity Φ2 in step s3, the second dew point F2 is calculated.

The dew points F1 and F2 may be stored in some memory of the control unit 4 for a later evaluation in step s5.

In the flow diagram of Figure 6, the method as illustrated in Figure 5 is extended by means of confirming the results derived from the first two measurements. The steps s1, s11, s2, s3 and s31 are executed in the same order and represent the same content as in Figure 5. After having executed the method step s31, the two dew points F1 and F2 are calculated, and the heater still is activated. In subsequent step s6, the heater now is deactivated, and it is waited for a while for allowing the temperature of the humidity sensor 1 to drop back to the level of the first temperature T1 which represents the initial temperature without any impact of heating. At such point in time, the temperature of the humidity sensor 1 for safety reasons is measured again in step s7 as third temperature T3, and an associated third relative humidity Φ3 is measured in the same step 7.

In step s71, a third dew point F3 is calculated based on the measured third temperature T3 and the measured third relative humidity Φ3. In subsequent step s5, the first and the second dew points F1 and F2 may be compared to each other, e.g. by means of evaluating a deviation |F2-F1|. In subsequent step s8, the third and the first dew point F3 and F1 may be compared to each other, e.g. by means of evaluating a deviation |F3-F1|. In case both of the deviations |F2-F1| and |F3-F1| are significant and as such e.g. exceed corresponding thresholds TH, another signal may indicate such scenario to the operator.

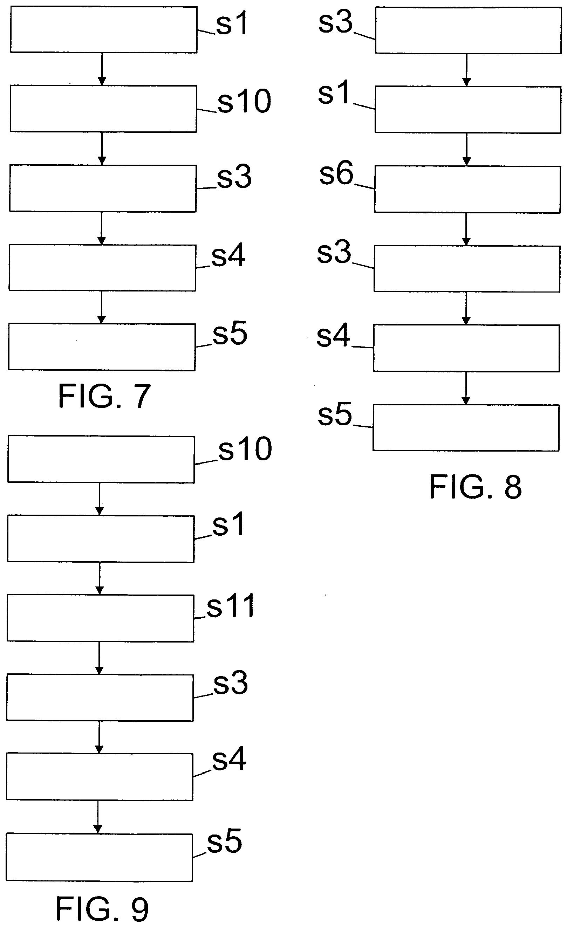

The method of Figure 7 differs from the method of Figure 4 in that instead of heating the humidity sensor 1 after having taken the first measurement with respect to relative humidity and temperature, the humidity sensor 1 is cooled down to a temperature lower than the first temperature T1. As a result, the heating step s2 of Figure 3 is replaced by a cooling step s10. A cooler may be provided in/for the testing arrangement. After a while during which it can be expected that the temperature has dropped significantly, a second temperature T2 is measured which will be lower than the first temperature T1, as will be measured a second relative humidity Φ2 at the second temperature T2, all in step s3. In step s4, the dew points F1 and F2 are calculated and in step s5, the calculated dew points F1 and F2 are evaluated.

The method of Figure 8 differs from the method of Figure 4 in that instead of heating the humidity sensor 1 after the first measurements are taken the humidity sensor 1 first is heated in step s3 by means of activating the heater. After a while, the temperature is measured as first temperature T1 in subsequent step s1 as is the first relative humidity Φ1 at such first temperature T1. In subsequent step s6, the heater is deactivated, and after a while, during which it can be expected that the temperature has dropped significantly, and in particular dropped down to the regular temperature without any heating impact, the second measurements are executed in step s3, while the dew points F1 and F2 are calculated in step s4 and the calculated dew points F1 and F2 are evaluated in step s5.

The method of Figure 9 differs from the method of Figure 8 in that instead of cooling the humidity sensor 1 after the first measurements are taken the humidity sensor 1 first is cooled in step s10 by means of activating a cooler. After a while, the temperature is measured as first temperature T1 in subsequent step s1 as is the first relative humidity Φ1 at such first temperature T1. In the subsequent step s11, the cooler is deactivated, and after a while, during which it can be expected that the temperature has risen significantly, and in particular risen up to the regular temperature without any cooling impact, the second measurements are executed in step s3, while the dew points F1 and F2 are calculated in step s4, and the calculated dew points F1 and F2 are evaluated in step s5.

It is noted that all formulas may be implemented as look up tables which may be easy to store in a computerized memory. Still, the underlying correlation between input and output variables may follow the underlying equations.

**Claims**

1. Method for testing a humidity sensor, comprising the steps of:

   at a first temperature (T1) measuring a first relative humidity (Φ1) by the humidity sensor (1),
   calculating a first value (V1) based on the measured first relative humidity (Φ1) and based on a saturated vapour pressure at the first temperature (T1),
   at a second temperature (T2) measuring a second relative humidity (Φ2) by the humidity sensor (1),
   calculating a second value (V2) based on the measured second relative humidity (Φ2) and based on a saturated vapour pressure at the second temperature (T2),
   which values (V1, V2) do not vary with varying temperatures in case the humidity sensor (1) is not affected in its sensing capabilities, and
   evaluating the first value (V1) and the second value (V2) relative to each other,
   wherein evaluating the first value (V1) and the second value (V2) relative to each other includes determining a deviation (|V2-V1|) between the first value (V1) and the second value (V2), comparing the deviation (|V2-V1|) with a threshold (TH), and issuing a signal when the deviation (|V2-V1|) exceeds the threshold (TH).

2. Method according to claim 1,
   wherein the first value (V1) represents a first dew point (F1), and
   wherein the second value (V2) represents a second dew point (F2).

3. Method according to claim 1,
   wherein the first value (V1) represents a first absolute humidity (AH1), and
   wherein the second value (V2) represents a second absolute humidity (AH2).

4. Method according to any one of the preceding claims,
   wherein the first and the second values (V1, V2) are determined from a look-up table.

5. Method according to any one of the preceding claims,
   wherein the first temperature (T1) and the second temperature (T2) each represent a temperature of the humidity sensor (1), which temperatures (T1, T2) are measured by a temperature sensor (2) arranged together with the humidity sensor (1) on a common substrate (11).

6. Method according to any one of the preceding claims,
   wherein between measuring the first relative humidity (Φ1) and the second relative humidity (Φ2) a heater (3) arranged on a common substrate (11) together with the humidity sensor (1) is activated for increasing the temperature (T) of the humidity sensor (1).

7. Method according to any one of the preceding claims,
   wherein the saturated vapour pressure is given by

   $$e(T) = \alpha \exp\left(\frac{mT}{T_n + T}\right)$$

   wherein:

   e denotes the saturated vapour pressure in Pascal,
   T denotes the temperature in °Celsius,
   m denotes a first constant,
   $T_n$ denotes a second constant, and
   α denotes a third constant.

8. Method according to claim 2,
   wherein the dew points (F1, F2) are calculated based on

   $$F(\phi, T) = T_n \frac{\ln\left(\frac{\phi \exp^{\frac{mT}{T_n+T}}}{100\%}\right)}{m - \ln\left(\frac{\phi \exp^{\frac{mT}{T_n+T}}}{100\%}\right)}$$

   wherein:

   F denotes the dew point in °Celsius,
   Φ denotes the relative humidity in %,
   T denotes the temperature in °Celsius,
   m denotes a first constant, and
   $T_n$ denotes a second constant.

9. Method according to claim 3,
   wherein the absolute humidities (AH1, AH2) are calculated based on

   $$AH(\phi, T) = \mu \frac{\frac{\phi}{100\%} \alpha \exp^{\frac{mT}{T_n+T}}}{v + T}$$

wherein:

AH denotes the absolute humidity in g/m$^3$,
$\Phi$ denotes the relative humidity in %,
T denotes the temperature in °Celsius,
m denotes a first constant,
$T_n$ denotes a second constant,
$\alpha$ denotes a third constant,
$\mu$ denotes a fourth constant, and
v denotes a sixth constant.

10. Method according to any one of the preceding claims,
wherein after measuring the first relative humidity ($\Phi$1) and the second relative humidity ($\Phi$2) a third relative humidity ($\Phi$3) is measured by the humidity sensor (1) at a third temperature (T3),
wherein a third value (V3) is calculated based on the measured third relative humidity ($\Phi$3) and based on a saturated vapour pressure at the third temperature (T3), and
wherein the third value (V3) is evaluated with respect to at least one of the first value (V1) and the second value (V2).

11. Method according to claim 6 in combination with claim 10,
wherein between measuring the second relative humidity ($\Phi$2) and the third relative humidity ($\Phi$3) the heater (3) is deactivated for allowing the temperature to drop.

12. Computer program element for testing a humidity sensor,
comprising computer program code means for calculating a first value (V1) based on a saturated vapour pressure at a first temperature (T1) and a first relative humidity ($\Phi$1) measured by a humidity sensor (1) at the first temperature (T1), calculating a second value (V2) based on a saturated vapour pressure at a second temperature (T2) and a second relative humidity ($\Phi$2) measured by the humidity sensor (1) at the second temperature (T2), which values (V1, V2) do not vary with varying temperatures in case the humidity sensor (1) is not affected in its sensing capabilities, and comparing the first value (V1) with the second value (V2) including determining a deviation (|V2-V1|) between the first value (V1) and the second value (V2), comparing the deviation (|V2-V1|) with a threshold (TH), and issuing a signal when the deviation (|V2-V1|) exceeds the threshold (TH).

13. Arrangement for testing a humidity sensor, comprising
the humidity sensor (1),
a temperature sensor (2),
one of a heater (3) and a cooler, and

a control unit (4) adapted for calculating a first value (V1) based on a saturated vapour pressure at a first temperature (T1) measured by the temperature sensor (2) and a first relative humidity ($\Phi$1) measured by the humidity sensor (1) at the first temperature (T1), calculating a second value (V2) based on a saturated vapour pressure at a second temperature (T2) measured by the temperature sensor (2) and a second relative humidity ($\Phi$2) measured by the humidity sensor (1) at the second temperature (T2), which values (V1, V2) do not vary with varying temperatures in case the humidity sensor (1) is not affected in its sensing capabilities, and comparing the first value (V1) with the second value (V2) including determining a deviation (|V2-V1|) between the first value (V1) and the second value (V2), comparing the deviation (|V2-V1|) with a threshold (TH), and issuing a signal when the deviation (|V2-V1|) exceeds the threshold (TH).

14. Arrangement according to claim 13,
wherein the humidity sensor (1), the temperature sensor (2) and the heater (3) are arranged on a common substrate (11).

15. Arrangement according to claim 14,
wherein the control unit (4) is arranged on the common substrate (11),
wherein the substrate (11) is a semiconductor substrate, and
wherein the control unit (4) is adapted for automatically performing the calculation, determination and comparison steps with respect to the values (V1, V2) and for initiating associated measurements and/or heating and/or cooling actions for providing an automated self-test for the humidity sensor (1).

**Patentansprüche**

1. Verfahren zum Testen eines Feuchtigkeitssensors, umfassend die Schritte:

Messen einer ersten relativen Feuchtigkeit ($\Phi$1) bei einer ersten Temperatur (T1) mittels des Feuchtigkeitssensors (1),
Berechnen eines ersten Wertes (V1) basierend auf der gemessenen ersten relativen Feuchtigkeit ($\Phi$1) und basierend auf einem gesättigten Dampfdruck bei der ersten Temperatur (T1),
Messen einer zweiten relativen Feuchtigkeit ($\Phi$2) bei einer zweiten Temperatur (T2) mittels des Feuchtigkeitssensors (1),
Berechnen eines zweiten Wertes (V2) basierend auf der gemessenen zweiten relativen Feuchtigkeit ($\Phi$2) und basierend auf einem gesättigten Dampfdruck bei der zweiten Temperatur (T2),

wobei die Werte (V1, V2) nicht mit sich ändernder Temperaturen variieren, im Falle dass der Feuchtigkeitssensor (1) in seinen Erfassungsfähigkeiten nicht beeinträchtig ist, und Auswerten des ersten Wertes (V1) und des zweiten Wertes (V2) bezogen aufeinander, wobei die Auswertung des ersten Wertes (V1) und des zweiten Wertes (V2) bezogen aufeinander die Bestimmung einer Abweichung ($|V2-V1|$) zwischen dem ersten Wert (V1) und dem zweiten Wert (V2), den Vergleich der Abweichung ($|V2-V1|$) mit einem Schwellwert (TH), und die Ausgabe eines Signals wenn die Abweichung ($|V2-V1|$) den Schwellwert (TH) überschreitet, einschliesst.

2. Verfahren nach Anspruch 1,
wobei der erste Wert (V1) einen ersten Taupunkt (F1) repräsentiert und
wobei der zweite Wert (V2) einen zweiten Taupunkt (F2) repräsentiert.

3. Verfahren nach Anspruch 1,
wobei der erste Wert (V1) eine erste absolute Feuchtigkeit (AH1) repräsentiert und
wobei der zweite Wert (V2) eine zweite absolute Feuchtigkeit (AH2) repräsentiert.

4. Verfahren nach einem der vorangehenden Ansprüche,
wobei der erste Wert und der zweite Wert (V1, V2) aus einer Lookup-Tabelle bestimmt werden.

5. Verfahren nach einem der vorangehenden Ansprüche,
wobei die erste Temperatur (T1) und die zweite Temperatur (T2) jeweils eine Temperatur des Feuchtigkeitssensors (1) repräsentiert, welche Temperaturen (T1, T2) von einem Temperatursensor (2) repräsentiert werden, welcher zusammen mit dem Feuchtigkeitssensor (1) auf einem gemeinsamen Substrat (11) angeordnet ist.

6. Verfahren nach einem der vorangehenden Ansprüche,
wobei zwischen der Messung der ersten relativen Feuchtigkeit ($\Phi$1) und der zweiten relativen Feuchtigkeit ($\Phi$2) eine Heizung (3), die auf einem gemeinsamen Substrat (11) zusammen mit dem Feuchtigkeitssensor (1) angeordnet ist, aktiviert wird, um die Temperatur (T) des Feuchtigkeitssensor (1) zu erhöhen.

7. Verfahren nach einem der vorangehenden Ansprüche,,
wobei der gesättigte Dampfdruck durch

$$e(T) = \alpha \exp\left(\frac{mT}{T_n + T}\right)$$

gegeben ist, wobei:

e den gesättigten Dampfdruck in Pascal bezeichnet,
T die Temperatur in °Celsius bezeichnet,
m eine erste Konstante bezeichnet,
$T_n$ eine zweite Konstante bezeichnet, und
$\alpha$ eine dritte Konstante bezeichnet.

8. Verfahren nach Anspruch 2,
wobei die Taupunkte (F1, F2) basierend auf

$$F(\phi, T) = T_n \frac{\ln\left(\frac{\phi \exp^{\frac{mT}{T_n+T}}}{100\%}\right)}{m - \ln\left(\frac{\phi \exp^{\frac{mT}{T_n+T}}}{100\%}\right)}$$

ausgerechnet werden, wobei:

F den Taupunkt in °Celsius bezeichnet,
$\Phi$ die relative Feuchtigkeit in % bezeichnet,
T die Temperatur in °Celsius bezeichnet,
m eine erste Konstante bezeichnet, und
$T_n$ eine erste Konstante bezeichnet.

9. Verfahren nach Anspruch 3,
wobei die absoluten Feuchtigkeiten (AH1, AH2) basierend auf

$$AH(\phi, T) = \mu \frac{\frac{\phi}{100\%} \alpha \exp^{\frac{mT}{T_n+T}}}{v + T}$$

ausgerechnet werden, wobei:

AH die absolute Feuchtigkeit in g/m$^3$ bezeichnet,
$\Phi$ die relative Feuchtigkeit in % bezeichnet,
T die Temperatur in °Celsius bezeichnet,
m eine erste Konstante bezeichnet,
$T_n$ eine zweite Konstante bezeichnet,
$\alpha$ eine dritte Konstante bezeichnet,
$\mu$ eine vierte Konstante bezeichnet, und
v eine sechste Konstante bezeichnet.

**10.** Verfahren nach einem der vorangehenden Ansprüche,
wobei nach der Messung der ersten relativen Feuchtigkeit (Φ1) und der zweiten relativen Feuchtigkeit (Φ2) ein dritte relative Feuchtigkeit (Φ3) vom Feuchtigkeitssensor (1) bei einer dritten Temperatur (T3) gemessen wird,
wobei ein dritter Wert (V3) basierend auf der gemessenen dritten relativen Feuchtigkeit (Φ3) und basierend auf einem gesättigten Dampfdruck bei der dritten Temperatur (T3) berechnet wird, und
wobei der dritte Wert (V3) bezogen auf dem ersten Wert (V1) und/oder dem zweiten Wert (V2) ausgewertet wird.

**11.** Verfahren nach Anspruch 6 in Kombination mit Anspruch 10,
wobei zwischen der Messung der zweiten relativen Feuchtigkeit (Φ2) und der dritten relativen Feuchtigkeit (Φ3) die Heizung (3) deaktiviert wird, um eine Temperaturabnahme zu ermöglichen.

**12.** Computerprogramelement zum Testen eines Feuchtigkeitssensors,
umfassend Computerprogrammcodemittel für die Berechnung eines ersten Wertes (V1) basierend auf einen gesättigten Dampfdruck bei einer ersten Temperatur (T1) und einer vom Feuchtigkeitssensor (1) gemessenen ersten relativen Feuchtigkeit (Φ1) bei der ersten Temperatur (T1), für die Berechnung eines zweiten Wertes (V2) basierend auf einen gesättigten Dampfdruck bei einer zweiten Temperatur (T2) und einer vom Feuchtigkeitssensor (1) gemessenen zweiten relativen Feuchtigkeit (Φ2) bei der zweiten Temperatur (T2), wobei die Werte (V1, V2) nicht mit sich ändernder Temperaturen variieren, im Falle dass der Feuchtigkeitssensor (1) in seinen Erfassungsfähigkeiten nicht beeinträchtig ist, und den Vergleich des ersten Wertes (V1) mit dem zweiten Wert (V2), einschliesslich der Bestimmung einer Abweichung (|V2-V1|) zwischen dem ersten Wert (V1) und dem zweiten Wert (V2), den Vergleich der Abweichung (|V2-V1|) mit einem Schwellwert (TH), und die Ausgabe eines Signals wenn die Abweichung (|V2-V1|) den Schwellwert (TH) überschreitet.

**13.** Anordnung zum Testen eines Feuchtigkeitssensors, umfassend
den Feuchtigkeitssensors (1),
einen Temperatursensor (2),
eine Heizung (3) oder einen Kühler, und
eine Steuerungseinheit (4), ausgestaltet zur Berechnung eines ersten Wertes (V1) basierend auf einem vom Temperatursensor (2) gemessenen gesättigten Dampfdruck bei einer ersten Temperatur (T1) und auf einer vom Feuchtigkeitssensor (1) gemessenen ersten relativen Feuchtigkeit (Φ1) bei der ersten Temperatur (T1), zur Berechnung eines zweiten Wertes (V2) basierend auf einem vom Temperatursensor (2) gemessenen gesättigten Dampfdruck bei einer zweiten Temperatur (T2) und auf einer vom Feuchtigkeitssensor (1) gemessenen zweiten relativen Feuchtigkeit (Φ2) bei der zweiten Temperatur (T2), wobei die Werte (V1, V2) nicht mit sich ändernder Temperaturen variieren, im Falle dass der Feuchtigkeitssensor (1) in seinen Erfassungsfähigkeiten nicht beeinträchtig ist, und zum Vergleich des ersten Wertes (V1) mit dem zweiten Wert (V2), einschliesslich der Bestimmung einer Abweichung (|V2-V1|) zwischen dem ersten Wert (V1) und dem zweiten Wert (V2), zum Vergleich der Abweichung (|V2-V1|) mit einem Schwellwert (TH), und zur Ausgabe eines Signals wenn die Abweichung (|V2-V1|) den Schwellwert (TH) überschreitet.

**14.** Anordnung nach Anspruch 13,
wobei der Feuchtigkeitssensor (1), der Temperatursensor (2) und die Heizung (3) auf einem gemeinsamen Substrat (11) angeordnet sind.

**15.** Anordnung nach Anspruch 14,
wobei die Steuerungseinheit (4) auf dem gemeinsamen Substrat (11) angeordnet ist,
wobei das Substrat (11) ein Halbleitersubstrat ist, und
wobei die Steuerungseinheit (4) zur automatischen Durchführung der Berechnungs-, Bestimmungs- und Vergleichsschritte bezogen auf die Werte (V1, V2) und zum Anstossen von zugehörigen Messungen und/oder Heiz- und/oder Kühlaktionen zur Bereitstellung eines automatisierten Selbsttests für den Feuchtigkeitssensor (1) ausgestaltet ist.

**Revendications**

**1.** Procédé pour tester un capteur d'humidité, comprenant les étapes:

de mesurer une première humidité relative (Φ1) à une première température (T1) par le capteur d'humidité (1),
de calculer une première valeur (V1) basé sur la première humidité relative mesurée (Φ1) et basé sur une pression de vapeur saturée à la première température (T1),
de mesurer une deuxième humidité relative (Φ2) à une deuxième température (T2) par le capteur d'humidité (1),
de calculer une deuxième valeur (V2) basé sur la deuxième humidité relative mesurée (Φ2) et basé sur une pression de vapeur saturée à la deuxième température (T2),
les valeurs (V1, V2) ne variant pas avec des températures variantes en cas le capteur d'humidité (1) n'est pas affecté dans ses capabilités de détection, et

d'évaluer la première valeur (V1) et la deuxième valeur (V2) l'une par rapport à l'autre,

l'évaluation de la première valeur (V1) et la deuxième valeur (V2) l'une par rapport à l'autre incluant la détermination d'une déviation (|V2-V1|) entre la première valeur (V1) et la deuxième valeur (V2), la comparaison de la déviation (|V2-V1|) avec un seuil (TH), et l'émission d'un signal quand la déviation (|V2-V1|) excède le seuil (TH).

2.  Procédé selon la revendication 1,
la première valeur (V1) représentant un premier point de rosée (F1), and
la deuxième valeur (V2) représentant un deuxième point de rosée (F2).

3.  Procédé selon la revendication 1,
la première valeur (V1) représentant une première humidité absolue (AH1), and
la deuxième valeur (V2) représentant une deuxième humidité absolue (AH2).

4.  Procédé selon l'une des revendications précédentes,
la première et la deuxième valeur (V1, V2) étant déterminées à partir d'un tableau de référence.

5.  Procédé selon l'une des revendications précédentes,
la première température (T1) et la deuxième température (T2) représentant chacune une température du capteur d'humidité (1), les températures (T1, T2) étant mesurées par un capteur de température (2) arrangé ensemble avec le capteur d'humidité (1) sur un substrat commun (11).

6.  Procédé selon l'une des revendications précédentes,
un chauffage (3) arrange sur un substrat commun (11) ensemble avec le capteur d'humidité (1) étant activé pour augmenter la température (T) du capteur d'humidité (1) entre la mesure de la première humidité relative ($\Phi1$) et la deuxième humidité relative ($\Phi2$).

7.  Procédé selon l'une des revendications précédentes,
la pression de vapeur saturée étant donnée par

$$e(T) = \alpha \exp\left(\frac{mT}{T_n + T}\right)$$

e représentant la pression de vapeur saturée en Pascal,

T représentant la température en °Celsius,
m représentant une première constante,
$T_n$ représentant une deuxième constante, et
$\alpha$ représentant une troisième constante.

8.  Procédé selon la revendication 2,
les points de rosée (F1, F2) étant calculés basé sur

$$F(\phi, T) = T_n \frac{\ln\left(\frac{\phi \exp^{\frac{mT}{T_n + T}}}{100\%}\right)}{m - \ln\left(\frac{\phi \exp^{\frac{mT}{T_n + T}}}{100\%}\right)}$$

F représentant le point de rosée en °Celsius,
$\Phi$ représentant l'humidité relative en %,
T représentant la température en °Celsius,
m représentant une première constante, et
$T_n$ représentant une deuxième constante.

9.  Procédé selon la revendication 3,
l'humidités absolues (AH1, AH2) étant calculées basé sur

$$AH(\phi, T) = \mu \frac{\frac{\phi}{100\%} \alpha \exp^{\frac{mT}{T_n + T}}}{v + T}$$

AH représentant l'humidité absolue en g/m$^3$,
$\Phi$ représentant l'humidité relative en %,
T représentant la température en °Celsius,
m représentant une première constante,
$T_n$ représentant une deuxième constante,
$\alpha$ représentant une troisième constante,
$\mu$ représentant une quatrième constante, et
v représentant une sixième constante.

10. Procédé selon l'une des revendications précédentes,
après avoir mesuré la première humidité relative ($\Phi1$) et la deuxième humidité relative ($\Phi2$) une troisième humidité relative ($\Phi3$) étant mesurée par le capteur d'humidité (1) à une troisième température (T3),
une troisième valeur (V3) étant calculée basé sur la troisième humidité relative ($\Phi3$) mesurée et basé sur une pression de vapeur saturée à la troisième température (T3), et
la troisième valeur (V3) étant évaluée par rapport à au moins une de valeurs: la première valeur (V1) et la deuxième valeur (V2).

**11.** Procédé selon la revendication 6 en combinaison avec la revendication 10,
le chauffage (3) étant désactivé pour permettre que la température décroît entre la mesure de la deuxième humidité relative (Φ2) et de la troisième humidité relative (Φ3).

**12.** Elément de logiciel d'ordinateur pour tester un capteur d'humidité,
comprenant des moyens de code de logiciel d'ordinateur pour calculer une première valeur (V1) basé une pression de vapeur saturée à une première température (T1) et une première humidité relative (Φ1) mesurée par un capteur d'humidité (1) à la première température (T1), pour calculer une deuxième valeur (V2) basé une pression de vapeur saturée à une deuxième température (T2) et une deuxième humidité relative (Φ2) mesurée par le capteur d'humidité (1) à la deuxième température (T2), les valeurs (V1, V2) ne variant pas avec des températures variantes en cas le capteur d'humidité (1) n'est pas affecté dans ses capabilités de détection, et pour comparer la première valeur (V1) avec la deuxième valeur (V2) incluant la détermination d'une déviation (|V2-V1|) entre la première valeur (V1) et la deuxième valeur (V2), pour comparer la déviation (|V2-V1|) avec un seuil (TH), et pour émettre un signal quand la déviation (|V2-V1|) excède le seuil (TH).

**13.** Agencement pour tester un capteur d'humidité, comprenant
le capteur d'humidité (1),
un capteur de température (2),
un chauffage (3) ou un refroidisseur, et
une unité de commande (4) adaptée à calculer une première valeur (V1) basé sur une pression de vapeur saturée à une première température (T1) mesurée par le capteur de température (2) et une première humidité relative (Φ1) mesurée par le capteur d'humidité (1) à la première température (T1), à calculer une deuxième valeur (V2) basé sur une pression de vapeur saturée à une deuxième température (T2) mesurée par le capteur de température (2) et une deuxième humidité relative (Φ2) mesurée par le capteur d'humidité (1) à la deuxième température (T2), les valeurs (V1, V2) ne variant pas avec des températures variantes en cas le capteur d'humidité (1) n'est pas affecté dans ses capabilités de détection, et à comparer la première valeur (V1) avec la deuxième valeur (V2) incluant la détermination d'une déviation (|V2-V1|) entre la première valeur (V1) et la deuxième valeur (V2), à comparer la déviation (|V2-V1|) avec un seuil (TH), et à émettre un signal quand la déviation (|V2-V1|) excède le seuil (TH).

**14.** Agencement selon la revendication 13,
le capteur d'humidité (1), le capteur de température (2) et le chauffage (3) étant arrangés sur un substrat commun (11).

**15.** Agencement selon la revendication 14, l'unité de commande (4) étant arrangée sur le substrat commun (11),
le substrat (11) étant un substrat semiconducteur, et l'unité de commande (4) étant adaptée pour automatiquement effectuer les étapes de calcul, détermination et comparaison par rapport aux valeurs (V1, V2) et pour initier des mesures associées et/ou pour des actions de chauffage et/ou refroidissement afin de fournir un autocontrôle pour le capteur d'humidité (1).

FIG. 1

FIG. 2

FIG. 3

FIG. 4

FIG. 5

FIG. 6

s1

s10

s3

s4

s5

FIG. 7

s3

s1

s6

s3

s4

s5

FIG. 8

s10

s1

s11

s3

s4

s5

FIG. 9

**EP 2 508 881 B1**

**REFERENCES CITED IN THE DESCRIPTION**

**Patent documents cited in the description**

- EP 123603B B1
- JP 2010237130 A
- US 5792938 A
- GB 2097130 A